(19) Europäisches Patentamt

European Patent Office

Office européen des brevets

(11) **EP 1 442 514 B1**

(12) **EUROPÄISCHE PATENTSCHRIFT**

(45) Veröffentlichungstag und Bekanntmachung des Hinweises auf die Patenterteilung:
**28.06.2006 Patentblatt 2006/26**

(21) Anmeldenummer: **02785178.1**

(22) Anmeldetag: **09.10.2002**

(51) Int Cl.:
*H02P 6/18* ^(2006.01)

(86) Internationale Anmeldenummer:
**PCT/EP2002/011284**

(87) Internationale Veröffentlichungsnummer:
**WO 2003/041261 (15.05.2003 Gazette 2003/20)**

(54) **VERFAHREN ZUR ERMITTLUNG DER WINKELLAGE EINES ROTORS**

METHOD FOR DETERMINING THE ANGULAR POSITION OF A ROTOR

PROCEDE POUR DETERMINER LA POSITION ANGULAIRE D'UN ROTOR

(84) Benannte Vertragsstaaten:
**DE FR IT**

(30) Priorität: **07.11.2001 DE 10154564**

(43) Veröffentlichungstag der Anmeldung:
**04.08.2004 Patentblatt 2004/32**

(73) Patentinhaber: **Conti Temic microelectronic GmbH
90411 Nürnberg (DE)**

(72) Erfinder: **DORNER, Thomas
90475 Nürnberg (DE)**

(56) Entgegenhaltungen:
**US-A- 5 023 527**

- **PATENT ABSTRACTS OF JAPAN vol. 1997, no. 05, 30. Mai 1997 (1997-05-30) -& JP 09 009676 A (FUJITSU GENERAL LTD), 10. Januar 1997 (1997-01-10)**
- **PATENT ABSTRACTS OF JAPAN vol. 1999, no. 10, 31. August 1999 (1999-08-31) -& JP 11 146685 A (MITSUBISHI ELECTRIC CORP), 28. Mai 1999 (1999-05-28)**
- **PATENT ABSTRACTS OF JAPAN vol. 2000, no. 16, 8. Mai 2001 (2001-05-08) -& JP 2001 008489 A (MATSUSHITA ELECTRIC IND CO LTD), 12. Januar 2001 (2001-01-12)**

EP 1 442 514 B1

**Beschreibung**

Die Erfindung betrifft ein Verfahren zur Ermittlung der Winkellage eines Rotors gemäß dem Oberbegriff des Patentanspruchs 1.

Ein derartiges Verfahren ist beispielsweise aus der EP 647 014 B1 bekannt. Das bekannte Verfahren dient der Ermittlung der Winkellage des Rotors eines bürstenlosen Motors. Bürstenlose Motoren sind elektronisch kommutierte Motoren, deren Wicklungsstränge in zyklischer Reihenfolge jeweils während eines vorgebbaren Stromflußwinkels synchron zur Winkellage des Rotors bestromt werden. Die Winkellage wird dabei ermittelt, indem elektromotorische Kräfte, die in den Wicklungssträngen induziert werden und die von der Winkellage des Rotors abhängig sind, erfaßt werden und indem die Nulldurchgänge der elektromotorischen Kräfte detektiert werden. Die Erfassung der elektromotorischen Kräfte erfolgt dabei durch Messung der an den Wicklungssträngen anstehenden Strangspannungen. Als nachteilig erweist sich hierbei, daß die elektromotorischen Kräfte lediglich in bestimmten Zeitintervallen, in denen die jeweiligen Wicklungsstränge keinen Strom führen, erfaßt werden können. Die Nulldurchgänge einer elektromotorischen Kraft lassen sich daher nur dann ermitteln, wenn sie in Zeitbereichen liegen, in denen der betreffende Wicklungsstrang nicht bestromt wird. Dadurch wird der Aussteuerbereich des Stromflußwinkels stark eingeschränkt.

Aus der EP 647 014 B1 ist weiterhin bekannt, daß die Winkellage des Rotors auch mit speziellen Positionssensoren, insbesondere mit Halleffektsensoren, ermittelt werden kann. Die Positionssensoren und der Aufwand für die mechanische Befestigung dieser Sensoren stellen jedoch einen erheblichen Kostennachteil dar.

Es ist aus der JP 09 009676 ein Verfahren bekannt in dem, während einer Messphase die EMK mit einer festen Referenzspannung verglichen wird und der Zeitpunkt des EMK Nulldurchgangs durch Abzug eines in einer Tabelle vorab gespeicherten drehzahlabhängigen Zeitabstands ermittelt wird.

Der Erfindung liegt daher die Aufgabe zugrunde, ein Verfahren gemäß dem Oberbegriff des Patentanspruchs 1 anzugeben, das auch bei großen Stromflußwinkeln genaue Ergebnisse liefert.

Die Aufgabe wird durch die Merkmale des Patentanspruchs 1 gelöst. Vorteilhafte Ausgestaltungen und Weiterbildungen ergeben sich aus den Unteransprüchen.

Erfindungsgemäß wird bei einem elektronisch kommutierten Motor die Winkellage des Rotors bei hohen Drehzahlen in einem zweistufigen Verfahren ermittelt. Dabei wird in einer erste Stufe - einer Kalibrierungsphase - bei einer bestimmten Motordrehzahl - der Kalibrierungsdrehzahl - eine Referenzspannung erzeugt und derart eingestellt, daß sie zu einem Zeitpunkt, zu dem der Rotor eine bestimmte Detektionsposition durchläuft, mit einer elektromotorischen Kraft übereinstimmt, welche in einem der Wicklungsstränge des Motors induziert wird. Die Detektionsposition ist dabei eine spezielle Winkellage des Rotors, bei der für den gesamten Aussteuerbereich des Stromflußwinkels die in dem einen Wicklungsstrang induzierte elektromotorische Kraft an diesem als Strangspannung ansteht und somit durch eine Spannungsmessung ermittelbar ist. In einer zweiten Stufe - der eigentlichen Meßphase - wird zunächst die momentane Motordrehzahl ermittelt. Die Ermittlung der Motordrehzahl erfolgt dabei vorzugsweise durch Ermittlung der Frequenz einer der an den Wicklungssträngen des Motors anstehenden Strangspannungen. Danach wird die Referenzspannung auf einen Wert aktualisiert, der gleich dem Produkt aus ihrem in der Kalibrierungsphase eingestellten Spannungswert und dem Verhältnis aus momentaner Motordrehzahl zu Kalibrierungsdrehzahl ist. Anschließend wird die Winkellage des Rotors ermittelt, bei der die in dem einen Wicklungsstrang induzierte elektromotorische Kraft mit der aktualisierten Referenzspannung übereinstimmt. Diese Winkellage wird als Detektionsposition identifiziert.

In einer vorteilhaften Weiterbildung des Verfahrens wird die Kalibrierungsdrehzahl und damit der Stromflußwinkel so gering gewählt, daß durch Auswertung der an einem der Wicklungsstränge anstehenden Strangspannung die Detektion von Nulldurchgängen der in diesem Wicklungsstrang induzierten elektromotorischen Kraft möglich ist. In der Kalibrierungsphase werden dann diese Nulldurchgänge detektiert und anhand ihrer Lage die Zeitpunkte ermittelt, zu denen der Rotor durch die Detektionsposition läuft.

Die Kalibrierungsphase wird vorzugsweise zyklisch wiederholt. Dadurch wird die Referenzspannung den temperaturbedingten Änderungen der elektromotorischen Kräfte angepaßt.

Das erfindungsgemäße Verfahren weist gegenüber einem Verfahren, bei dem die Winkellage des Rotors mit speziellen Positionssensoren ermittelt wird, einen Kostenvorteil auf, da keine Sensoren benötigt werden und damit auch der Arbeitsaufwand zur Montage und genauen Positionierung solcher Sensoren entfällt. Zudem liefert es genaue Ergebnisse, da keine mechanischen Toleranzen, die bei der Verwendung von Positionssensoren unvermeidbar sind, in die Auswertung eingehen.

Das erfindungsgemäße Verfahren eignet sich bestens zur Steuerung von viersträngigen bürstenlosen Motoren, wie sie beispielsweise in Kraftfahrzeugen zum Antrieb von Kühlerlüftern eingesetzt werden.

Die Erfindung wird nachfolgend anhand eines Ausführungsbeispiels und anhand von Figuren näher erläutert. Es zeigen:

Figur 1    ein Blockschaltbild mit einem elektronisch kommutierten Motor und einer Steuervorrichtung für diesen Motor,

Figur 2    eine schematische Darstellung von Signalen zur Erläuterung des Kommutierungsvorgangs,

Figur 3    eine schematische Darstellung von Signalen während einer Kalibrierungsphase,

Figur 4    eine schematische Darstellung von Signalen während einer Meßphase.

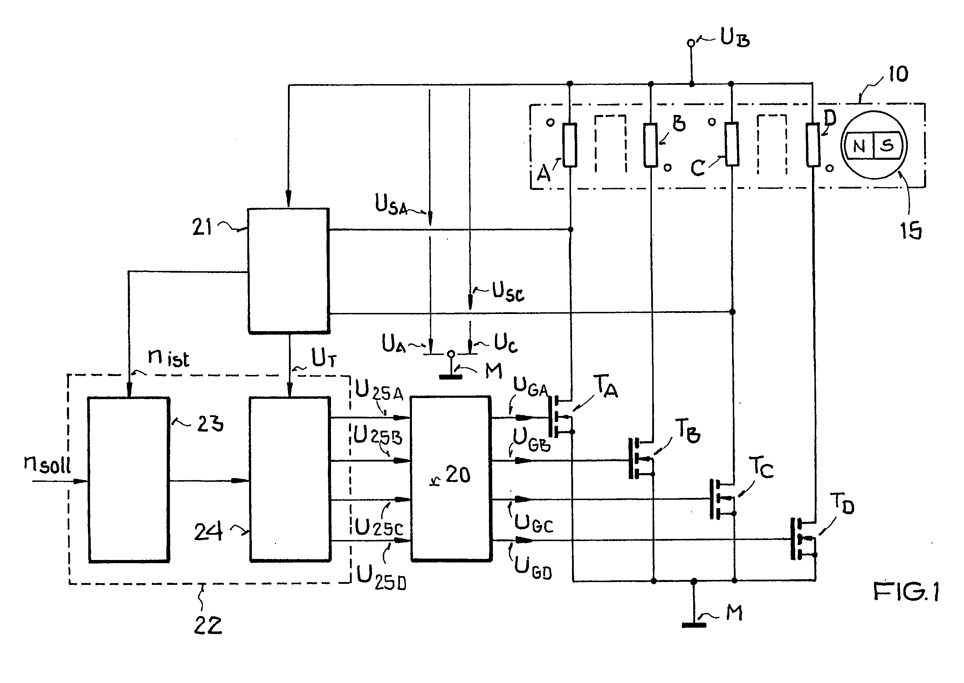

Figur 1 zeigt als Ausführungsbeispiel ein Blockschaltbild eines elektronisch kommutierten Motors 10 und ein Blockschaltbild einer Steuervorrichtung zur Regelung der Drehzahl des Motors 10.

Der Motor 10 weist einen permanentmagnetischen Rotor 15 und einen Stator mit vier Wicklungssträngen A, B, C, D auf, von denen jeweils zwei zu einem Strangpaar A, B bzw. C, D zusammengefaßt sind, wobei die Strangpaare A, B bzw. C, D jeweils auf einen Zahn gewickelt sind. Die Wicklungsstränge A, B bzw. C, D des jeweiligen Strangpaares sind dabei bifilar parallel gewickelt und erzeugen im bestromten Zustand Magnetfelder entgegengesetzter Polarität. Der Motor 10 wird aus einer Gleichspannungsquelle, beispielsweise aus einer Fahrzeugbatterie, bestromt. Die Wicklungsstränge A, B, C, D sind hierzu jeweils mit einem Anschluß an einen gemeinsamen Schaltungsknoten angeschlossen, an dem eine von der Gleichspannungsquelle bereitgestellte Batteriespannung $U_B$ ansteht, und mit den gegenüberliegenden Anschlüssen über jeweils einen beispielsweise als Feldeffekttransistor ausgeführten Steuertransistor $T_A$ bzw. $T_B$ bzw. $T_C$ bzw. $T_D$ mit einem Masseanschluß M verbunden.

Die Wicklungsstränge A, B, C, D werden in zyklischer Reihenfolge jeweils während eines vorgebbaren elektrischen Stromflußwinkels $\alpha$ über die Steuertransistoren $T_A$, $T_B$, $T_C$, $T_D$ bestromt. Für das folgerichtige Ansteuern der Steuertransistoren $T_A$, $T_B$, $T_C$, $T_D$ werden von einer Steuervorrichtung 21, 22, 20 Steuerimpulse generiert, die den Steuereingängen der Steuertransistoren $T_A$, $T_B$, $T_C$, $T_D$ als Steuersignale $U_{GA}$, $U_{GB}$, $U_{GC}$, $U_{GD}$ zugeführt werden.

Die Steuervorrichtung umfaßt eine Aufbereitungsstufe 21, die aus den Strangspannungen $U_{SA}$ und $U_{SC}$ des Wicklungsstrangs A und des Wicklungsstrangs C die momentane Motordrehzahl $n_{ist}$ ermittelt und ein Triggersignal $U_T$ erzeugt, welches die Zeitpunkte markiert, zu denen der Rotor 15 eine bestimmte Winkellage $\varphi$ durchläuft. Die Steuervorrichtung umfaßt ferner eine Treibereinheit 20 zur Erzeugung der Steuersignale $U_{GA}$, $U_{GB}$, $U_{GC}$, $U_{GD}$ sowie eine Regelstufe 22 zur Ansteuerung der Treiberstufe 20. Die Regelstufe 22 umfaßt ihrerseits einen Vergleicher 23, der die momentane Motordrehzahl $n_{ist}$ mit einer vorgegebenen Solldrehzahl $n_{soll}$ vergleicht, und eine Auswerteeinheit 24, die aus dem Ergebnis des Drehzahlvergleichs und dem Triggersignal $U_T$ zeitrichtig Signale $U_{25A}$, $U_{25B}$, $U_{25C}$, $U_{25D}$ für die Treibereinheit 20 erzeugt. Die Regelstufe 22 kann zusätzlich Mittel zur Ermittlung des durch die Wicklungsstränge A, B, C, D fließenden Stroms und zur Weiterleitung der Strominformation an die Auswerteeinheit 24 aufweisen. Der Strom läßt sich beispielsweise mit einem im Massezweig der Steuertransistoren $T_A$, $T_B$, $T_C$, $T_D$ vorgesehenem Shuntwiderstand ermitteln.

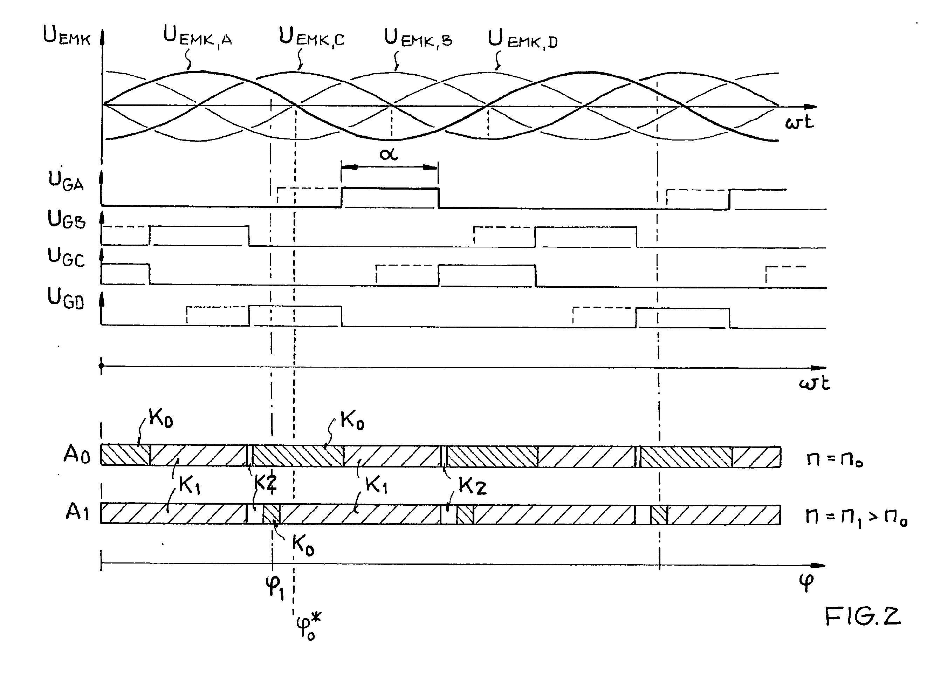

Die Kommutierung des Motors 10 läßt sich anhand der Figur 2 erklären. In dieser Figur sind die Signale in Abhängigkeit der Winkellage $\varphi = \omega t$ des Rotors 15 dargestellt. Das obere Diagramm zeigt die in den Wicklungssträngen A, B, C, D induzierten elektromotorischen Kräfte $U_{EMK,A}$, $U_{EMK,B}$, $U_{EMK,C}$, $U_{EMK,D}$. Darunter sind die den Steuertransistoren $T_A$, $T_B$, $T_C$, $T_D$ zugeführten Steuersignale $U_{GA}$, $U_{GB}$, $U_{GC}$, $U_{GD}$ dargestellt. Die Pulsbreiten dieser Steuersignale $U_{GA}$, $U_{GB}$, $U_{GC}$, $U_{GD}$ entsprechen dem Stromflußwinkel $\alpha$ des jeweiligen Steuertransistors $T_A$, $T_B$, $T_C$, $T_D$ und bestimmen die Motordrehzahl n des Motors 10. Durch Vergrößerung des Stromflußwinkels $\alpha$ in der durch gestrichelte Linien dargestellten Weise läßt sich die Motordrehzahl n von einer niedrigen Drehzahl $n_0$ auf eine hohe Drehzahl $n_1$ erhöhen. Unter den Steuersignalen $U_{GA}$, $U_{GB}$, $U_{GC}$, $U_{GD}$ sind Arbeitsabschnitte $A_0$, $A_1$, des Strangpaares A, B bei niedriger Drehzahl n = $n_0$ bzw. hoher Drehzahl n = $n_1$ dargestellt. Die Arbeitsabschnitte $A_0$, $A_1$ setzen sich aus verschiedenen Winkelabschnitten $K_0$, $K_1$, $K_2$ zusammen. In den Winkelabschnitten $K_0$ ist sowohl der Wicklungsstrang A als auch der auf den gleichen Zahn gewickelte Wicklungsstrang B stromlos geschaltet, in den Winkelabschnitten $K_1$ ist entweder der Transistor $T_A$ oder der Transistor $T_B$ zur Bestromung des Wicklungsstrangs A oder des Wicklungsstrangs B in einen leitenden Zustand geschaltet und die Winkelabschnitte $K_2$ stellen Bereiche dar, in denen nach Abschalten der Transistoren $T_A$ bzw. $T_B$ der Wicklungsstrang A bzw. B abkommutiert wird.

Die in den Wicklungssträngen A, B, C, D induzierten elektromotorischen Kräfte $U_{EMK,A}$ bzw. $U_{EMK,B}$ bzw. $U_{EMK,C}$ bzw. $U_{EMK,D}$ weisen jeweils einen durch die Winkellage $\varphi$ bestimmten Verlauf auf. Sie stehen in Winkelabschnitten, in denen der betreffende Wicklungsstrang und der auf den gleichen Zahn gewickelte Wicklungsstrang nicht bestromt sind, am betreffenden Wicklungsstrang als Strangspannung an und lassen sich in diesen Winkelabschnitten durch eine einfache Spannungsmessung ermitteln. Beispielsweise steht die im Wicklungsstrang A induzierte elektromotorische Kraft $U_{EMK,A}$ dann an am Wicklungsstrang A als Strangspannung $U_{SA}$ an, wenn weder durch den Wicklungsstrang A noch durch den Wicklungsstrang B ein Strom fließt, also in den Winkelabschnitten $K_0$. Dieser Winkelabschnitt $K_0$ ist bei einem geringen Stromflußwinkel $\alpha$ und somit bei der geringen Drehzahl $n_0$ groß und umfaßt einen Bereich der elektromotorischen Kraft $U_{EMK,A}$, in der diese einen Nulldurchgang $\varphi_0{}^*$ aufweist. Dieser ist weder drehzahlnoch temperaturabhängig. Demgegenüber ist der Winkelabschnitt $K_0$ bei der hohen Drehzahl $n_1$ sehr klein und umfaßt dann einen Bereich der elektromotorischen Kraft $U_{EMK,A}$, in der diese keinen Nulldurchgang aufweist. In diesem Bereich ist die elektromotorische Kraft $U_{EMK,A}$ drehzahl- und temperaturabhängig.

Um auch bei hohen Motordrehzahlen n, bei denen die Nulldurchgänge der elektromotorischen Kräfte nicht als Strangspannungen sichtbar sind, eine genaue Ermittlung der Winkellage $\alpha$ des Rotors 15 zu ermöglichen, wird zunächst eine Kalibrierung der Steuervorrichtung vorgenommen.

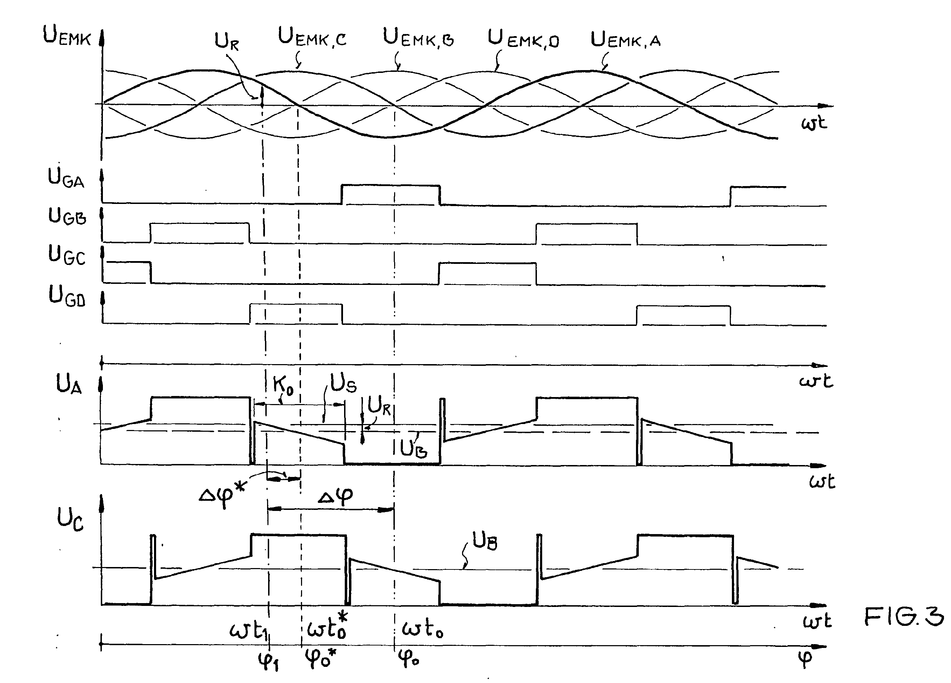

Der Kalibrierungsvorgang läßt sich am besten anhand der Figur 3 beschreiben. In dieser Figur sind die Signale ebenfalls in Abhängigkeit der Winkellage $\varphi = \omega t$ des Rotors 15 dargestellt. Das obere Diagramm zeigt die in den Wicklungssträngen A, B, C, D induzierten elektromotorischen Kräfte $U_{EMK,A}$, $U_{EMK,B}$, $U_{EMK,C}$, $U_{EMK,D}$, darunter sind die den Steuertransistoren $T_A$, $T_B$, $T_C$, $T_D$ zugeführten Steuersignale $U_{GA}$, $U_{GB}$, $U_{GC}$, $U_{GD}$ dargestellt und unter diesen Signalen sind die Meßspannungen $U_A$ und $U_C$ dargestellt, die am Verbindungspunkt des Wicklungsstrangs A mit dem Steuertransistor $T_A$ bzw. am Verbindungspunkt des Wicklungsstrangs C mit dem Steuertransistor $T_C$ anstehen.

Die Winkellage $\varphi_0$ entspricht dem Nulldurchgang der elektromotorischen Kraft $U_{EMK,C}$ und die Winkellage $\varphi_0^*$ entspricht dem Nulldurchgang der elektromotorischen Kraft $U_{EMK,A}$. Die Winkellage $\varphi_1$ wird im folgenden als Detektionsposition bezeichnet. Sie ist derart gewählt, daß sie auch bei maximalem Stromflußwinkel $\alpha$ in einem Winkelbereich liegt, in dem am Wicklungsstrang A die elektromotorische Kraft $U_{EMK,A}$ als Strangspannung $U_{SA}$ ansteht. Die Detektionsposition $\varphi_1$ ist gegenüber dem Nulldurchgang $\varphi_0$ oder $\varphi_0^*$ der elektromotorischen Kraft $U_{EMK,C}$ bzw. $U_{EMK,A}$ um einen fest vorgegebenen Winkelwert $\Delta\varphi$ bzw. $\Delta\varphi^*$ beabstandet.

In der Kalibrierungsphase wird die Motordrehzahl n durch Steuerung des Stromflußwinkels $\alpha$ auf eine Kalibrierungsdrehzahl $n_K$ eingestellt, die so gering gewählt ist, daß die im Wicklungsstrang C induzierte elektromotorische Kraft $U_{EMK,C}$ in dem Winkelbereich, in dem sie als Strangspannung $U_{SC}$ am Wicklungsstrang C ansteht, einen Nulldurchgang $\varphi_0$ aufweist. Die Einhaltung der Kalibrierungsdrehzahl $n_K$ läßt sich dabei durch eine Frequenzanalyse der Meßspannung $U_A$ oder $U_C$ überprüfen.

Danach wird bei konstanter Kalibrierungsdrehzahl $n_K$ der Nulldurchgang $\varphi_0$ ermittelt. Hierzu wird zunächst der Winkelbereich ermittelt, in dem die elektromotorische Kraft $U_{EMK,C}$ am Wicklungsstrang C als Strangspannung $U_{SC}$ ansteht. In diesem Winkelbereich wird die Meßspannung $U_C$ mit der Batteriespannung $U_B$ verglichen und die Winkellage $\varphi$, bei der die Meßspannung $U_C$ mit der Batteriespannung $U_B$ übereinstimmt als Nulldurchgang $\varphi_0$ identifiziert. Alternativ kann auch der Nulldurchgang $\varphi_0^*$ der elektromotorischen Kraft $U_{EMK,A}$ durch Vergleichen der Meßspannung $U_A$ mit der Batteriespannung $U_B$ detektiert werden. Dann wird eine Schwellenspannung $U_S$, die gleich der Summe aus der Batteriespannung $U_B$ und einer Referenzspannung $U_R$ ist, mit der Meßspannung $U_A$ verglichen und durch Variation der Referenzspannung $U_R$ derart geregelt, daß die Schwellenspannung $U_S$ und die Meßspannung $U_A$ sich bei der Detektionsposition $\varphi_1$, die vom Nulldurchgang $\varphi_0$ um bekannten Winkelwert $\Delta\varphi$ oder vom Nulldurchgang $\varphi_0^*$ um den bekannten Winkelwert $\Delta_\varphi^*$ beabstandet ist, schneiden. Durch diese Maßnahme wird die Referenzspannung $U_R$ auf einen Spannungswert eingestellt, den die elektromotorische Kraft $U_{EMK,A}$ dann annimmt, wenn der Rotor 15 die Detektionsposition $\varphi_1$ durchläuft. Dieser Wert wird als Kalibrierungswert $U_{kal}$ zwischengespeichert.

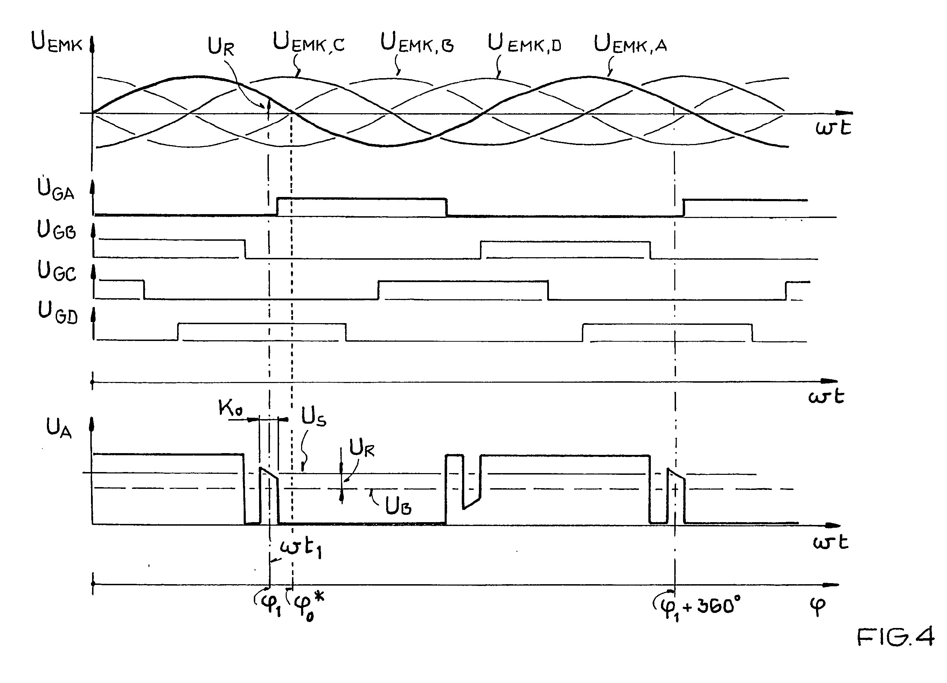

Die eigentliche Messung erfolgt in einer anschließenden Meßphase, die anhand der Figur 4 näher beschrieben wird. In dieser Figur sind die Signale ebenfalls Abhängigkeit der Winkellage $\varphi = \omega t$ des Rotors 15 dargestellt. Das obere Diagramm zeigt wie in Figur 3 die in den Wicklungssträngen A, B, C, D induzierten elektromotorischen Kräfte $U_{EMK,A}$, $U_{EMK,B}$, $U_{EMK,C}$, $U_{EMK,D}$. Darunter sind die den Steuertransistoren $T_A$, $T_B$, $T_C$, $T_D$ zugeführten Steuersignale $U_{GA}$, $U_{GB}$, $U_{GC}$, $U_{GD}$ und die Meßspannung $U_A$ dargestellt. Dabei sind die Signale für einen Stromflußwinkel $\alpha$ dargestellt, der so groß gewählt ist, daß der Nulldurchgang $\varphi_0^*$ der elektromotorischen Kraft $U_{EMK,A}$ nicht mehr als Strangspannung $U_{SA}$ sichtbar ist.

Während der Meßphase wird zunächst die momentane Motordrehzahl $n_{ist}$ ermittelt. Danach wird die Referenzspannung $U_R$ auf einen Wert $U_{Rakt}$ aktualisiert, wobei die Aktualisierung gemäß der Gleichung

$$U_{Rakt} = U_{kal} \cdot (n_{ist}/n_K)$$

erfolgt. Hierbei steht $U_{kal}$ für den in der Kalibrierungsphase eingestellten Spannungswert der Referenzspannung $U_R$, $n_{ist}$ für die momentane Motordrehzahl und $n_{kal}$ für die Kalibrierungsdrehzahl. Durch die Aktualisierung der Referenzspannung $U_R$ wird auch die Schwellenspannung $U_S$ auf einen drehzahlabhängigen Wert aktualisiert, und zwar auf den Wert

$$U_S = U_B + U_{kal} \cdot (n_{ist}/n_K).$$

Danach wird im Winkelbereich $K_0$, in dem die elektromotorische Kraft $U_{EMK,A}$ am Wicklungsstrang A als Strangspannung $U_{SA}$ ansteht, die Winkellage $\varphi$ ermittelt, bei der die Meßspannung $U_A$ mit der aktualisierten Schwellenspannung $U_S$ übereinstimmt. Dies entspricht der Ermittlung der Winkellage $\varphi$, bei der die elektromotorische Kraft $U_{EMK,A}$ gleich dem aktualisierten Wert $U_{Rakt}$ der Referenzspannung $U_R$ ist. Diese Winkellage $\varphi$ wird als Detektionsposition $\varphi_1$ identifiziert.

Auf diese Weise läßt sich die Winkellage $\varphi$ des Rotors 15 auch bei großen Stromflußwinkeln $\alpha$, bei denen die Nullagen der elektromotorischen Kräfte nicht mehr an den Wicklungssträngen des Motors sichtbar sind, mit hoher Genauigkeit ermitteln.

**Patentansprüche**

1. Verfahren zur Ermittlung der Winkellage ($\varphi$) eines Rotors (15) eines mehrere Wicklungsstränge (A, B, C, D) aufweisenden elektronisch kommutierten Motors (10), bei dem die Wicklungsstränge (A, B, C, D) in zyklischer Reihenfolge jeweils während eines vorgebbaren Stromflußwinkels ($\alpha$) bestromt werden, wobei

   - eine Winkellage ($\varphi$) des Rotors (15), bei der für den gesamten Aussteuerbereich des Stromflußwinkels ($\alpha$) an einem der Wicklungsstränge (A) eine in diesem Wicklungsstrang (A) induzierte elektromotorische Kraft ($U_{EMK,A}$) als Strangspannung ($U_{SA}$) ansteht, als Detektionsposition ($\varphi_1$) gewählt wird,
   - während einer Kalibrierungsphase die Motordrehzahl (n) auf eine Kalibrierungsdrehzahl ($n_K$) eingestellt wird und eine Referenzspannung ($U_R$) derart eingestellt wird, daß sie dann, wenn der Rotor die Detektionsposition ($\varphi_1$) durchläuft, gleich der in dem einen Wicklungsstrang (A) induzierten elektromotorischen Kraft ($U_{EMK,A}$) ist,
   - und während einer Meßphase die momentane Motordrehzahl ($n_{ist}$) ermittelt wird, die Referenzspannung ($U_R$) auf einen Wert aktualisiert wird, der gleich dem Produkt aus ihrem in der Kalibrierungsphase eingestellten Spannungswert ($U_{kal}$) und dem Verhältnis aus momentaner Motordrehzahl ($n_{ist}$) zu Kalibrierungsdrehzahl ($n_K$) ist, und diejenige Winkellage ($\varphi$) des Rotors (15), bei der die in dem einen Wicklungsstrang (A) induzierte elektromotorische Kraft ($U_{EMK,A}$) mit der aktualisierten Referenzspannung ($U_R$) übereinstimmt, als Detektionsposition identifiziert ($\varphi_1$) wird.

2. Verfahren nach Anspruch 1, **dadurch gekennzeichnet, daß** die Kalibrierungsdrehzahl ($n_K$) so gering gewählt wird, daß durch Auswertung der an einem der Wicklungsstränge (A, C) anstehenden Strangspannung ($U_{SA}$, $U_{SC}$) die Detektion von Nulldurchgängen ($\varphi_0^*$, ($\varphi_0$) der in diesem Wicklungsstrang induzierten elektromotorischen Kraft ($U_{EMK,A}$, $U_{EMK,C}$) möglich ist und daß in der Kalibrierungsphase die Nulldurchgänge ($\varphi_0^*$ bzw. $\varphi_0$) detektiert werden und anhand ihrer Lage die Zeitpunkte ermittelt werden, zu denen der Rotor durch die Detektionsposition ($\varphi_1$) läuft.

3. Verfahren nach einem der vorherigen Ansprüche, **dadurch gekennzeichnet, daß** die Motordrehzahl (n) durch Ermittlung der Frequenz einer der an den Wicklungssträngen (A, B, C, D) anstehenden Strangspannungen ermittelt wird.

4. Verfahren nach einem der vorherigen Ansprühe, **dadurch gekennzeichnet, daß** die Kalibrierungsphase während des Betriebs des Motors mehrfach wiederholt wird.

5. Verfahren nach einem der vorherigen Ansprüche, **dadurch gekennzeichnet, daß** die in einem der Wicklungsstränge (A, B, C, D) induzierte elektromotorische Kraft ($U_{EMK,A}$, $U_{EMK,B}$, $U_{EMK,C}$ $U_{EMK,D}$) ermittelt wird, indem die Strangspannung des betreffenden Wicklungsstrangs in einem Zeitintervall ausgewertet wird, in dem der Wicklungsstrang und ggf. jeder weitere auf einen gleichen Zahn gewickelter Wicklungsstrang stromlos geschaltet ist bzw. sind.

**Claims**

1. Method for determining the angular position ($\varphi$) of a rotor (15) of an electronically commutated motor (10), said motor (10) comprising several winding phases (A, B, C, D), in which the winding phases (A, B, C, D) are each energized in cyclic order during a predeterminable current conduction angle ($\alpha$), wherein

   - an angular position ($\varphi$) of the rotor (15) is selected as detection position ($\varphi_1$), in which angular position ($\varphi$) an electromotive force ($U_{EMK,A}$) is applied as phase voltage ($U_{SA}$) to one of the winding phases (A) for the entire dynamic range of the current conduction angle ($\alpha$), said electromotive force ($U_{EMK,A}$) being induced in this winding phase (A);
   - during a calibration phase, the motor speed (n) is adjusted to a calibration speed ($n_K$), and a reference voltage ($U_R$) is adjusted in such a manner that it equals, when the rotor passes through the detection position ($\varphi_1$), the electromotive force ($U_{EMK,A}$) induced in this one winding phase (A);
   - and during a measuring phase, the instantaneous motor speed ($n_{ist}$) is determined, the reference voltage ($U_R$) is updated to a level that equals the product of its voltage level ($U_{kal}$) adjusted in the calibration phase and the ratio that instantaneous motor speed ($n_{ist}$) bears to calibration speed ($n_K$), and that the angular position ($\varphi$) of the rotor (15) in which the electromotive force ($U_{EMK,A}$) induced in this one winding phase (A) corresponds to the updated reference voltage ($U_R$) is identified as detection position ($\varphi_1$).

2. Method according to claim 1, **characterized in that** the calibration speed ($n_K$) is selected to be so low that, by evaluating the phase voltage ($U_{SA}$, $U_{SC}$) applied to one of the winding phases (A, C), zero crossings ($\varphi_0^*$, $\varphi_0$) of the electromotive force ($U_{EMK,A}$, $U_{EMK,C}$) that is induced in this winding phase are enabled to be detected, and that in the calibration phase zero crossings ($\varphi_0^*$ and $\varphi_0$, respectively) are detected and on the basis of their positions the instants at which the rotor passes through the detection position ($\varphi_1$) are determined.

3. Method according to any one of the preceding claims, **characterized in that** the motor speed (n) is determined by determining the frequency of one of the phase voltages that are applied to the winding phases (A, B, C, D).

4. Method according to any one of the preceding claims, **characterized in that** the calibration phase is repeated several times during operation of the motor.

5. Method according to any one of the preceding claims, **characterized in that** the electromotive force ($U_{EMK,A}$, $U_{EMK,B}$, $U_{EMK,C}$, $U_{EMK,D}$) induced in one of the winding phases (A, B, C, D) is determined **in that** the phase voltage of the respective winding phase is evaluated in a period in which the winding phase and, if applicable, any other winding phase wound onto a same tooth is/are switched to be currentless.

**Revendications**

1. Procédé de détermination de la position angulaire ($\varphi$) d'un rotor (15) d'un moteur à commutation électronique (10) présentant plusieurs brins d'enroulement (A, B, C, D), dans lequel les brins d'enroulement (A, B, C, D) sont alimentés en courant dans un ordre cyclique respectivement pendant un temps d'intégration ($\alpha$) paramétrable,

   - une position angulaire ($\varphi$) du rotor (15) pour laquelle, pour la totalité de la plage de pilotage du temps d'intégration ($\alpha$), une force électromotrice ($U_{EMK,A}$) induite dans ce brin d'enroulement (A) est présente sur un des brins d'enroulement (A), en tant que tension de brin ($U_{SA}$), étant détectée en tant que position de détection ($\varphi_1$),
   - pendant une phase d'étalonnage, le régime du moteur (n) étant réglé à un régime d'étalonnage ($n_K$), et une tension de référence ($U_R$) étant réglée de sorte que, lorsque le rotor franchit la position de détection ($\varphi_1$), elle est égale à la force électromotrice ($U_{EMK,A}$) induite dans le brin d'enroulement (A),
   - et, pendant une phase de mesure, le régime

du moteur momentané ($n_{ist}$) étant déterminé, la tension de référence ($U_R$) étant actualisée à une valeur qui est égale au produit de sa valeur de tension ($U_{kal}$) réglée dans la phase d'étalonnage et du rapport du régime du moteur momentané ($n_{ist}$) au régime d'étalonnage ($n_{kal}$), et la position angulaire ($\varphi$) du rotor (15) pour laquelle la force électromotrice ($U_{EMK,A}$) induite dans le brin d'enroulement (A) coïncide avec la tension de référence ($U_R$) actualisée étant identifiée comme position de détection ($\varphi_1$).

2. Procédé selon la revendication 1, **caractérisé en ce que** le régime d'étalonnage ($n_K$) est sélectionné suffisamment faible pour que l'analyse de la tension de brin ($U_{SA}$, $U_{SC}$) présente sur un des brins d'enroulement (A, C) permette la détection de passages par zéro ($\varphi_0^*$, $\varphi_0$) de la force électromotrice ($U_{EMK,A}$, $U_{EMK,C}$) induite dans ce brin d'enroulement, et **en ce que**, dans la phase d'étalonnage, les passages par zéro ($\varphi_0^*$ ou $\varphi_0$) sont détectés, et **en ce que**, à l'aide de leur position, les moments où le rotor franchit cette position de détection ($\varphi_1$) sont déterminés.

3. Procédé selon une des revendications précédentes, **caractérisé en ce que** le régime du moteur (n) est déterminé par la détermination de la fréquence d'une des tensions de brin présentes sur les brins d'enroulement (A, B, C, D).

4. Procédé selon une des revendications précédentes, **caractérisé en ce que** la phase d'étalonnage est répétée plusieurs fois pendant le fonctionnement du moteur.

5. Procédé selon une des revendications précédentes, **caractérisé en ce que** la force électromotrice ($U_{EMK,A}$, $U_{EMK,B}$, $U_{EMK,C}$, $U_{EMK,D}$) induite dans un des brins d'enroulement (A, B, C, D) est déterminée en analysant la tension de brin du brin d'enroulement concerné dans un intervalle de temps dans lequel le brin d'enroulement et éventuellement chaque autre brin d'enroulement enroulé sur une même dent est ou sont commuté(s) hors courant.

FIG.1

EP 1 442 514 B1

FIG.2

FIG. 3

EP 1 442 514 B1

FIG.4

EP 1 442 514 B1